# EUROPEAN PATENT APPLICATION

(11) **EP 3 112 665 A2**
(43) Date of publication of application: **04.01.2017**
(21) Application number: 16167578.0
(22) Date of filing: 28.04.2016
(51) Int. Cl.: F02N 11/10, F02N 11/12

(54) **CAR STARTER WHICH WORKS UNDER VERY LOW TEMPERATURE AND A PROTECTION CIRCUIT THEREOF**

(30) Priority: 30.04.2015 CN 201520274043 U; 30.04.2015 CN 201520274107 U
(71) Applicant: Modern Home Lighting Inc., Yisha District, Shatian Town Dongguan City Guangdong (CN)
(72) Inventor: Yang, Feng-Tao, Dongguan City Guangdong (CN)
(74) Representative: Lang, Christian

(57) **Abstract**

A car starter able to work under very low temperature and a protection circuit thereof, include primarily a positive electrode output end, a negative electrode output end, an MCU single-chip microcomputer, a starter, a power heating circuit, and a MOS tube control circuit. The positive electrode of the starter is connected respectively with the positive electrode output end and the power heating circuit. Two pins are drawn from the MCU single-chip microcomputer to connect respectively with one of two ends of the MOS tube control circuit, and another three pins are drawn from the MCU single-chip microcomputer to connect with the power heating circuit. The feature of the present invention is that an independent power heating circuit is designed to solve the problem that the batteries cannot be discharged at a large electric current under very low temperature and to heat up the batteries of the car starter quickly and safely under low temperature, allowing the batteries of the car starter to achieve a reasonable working temperature, and solving the issues of using the car starter under low temperature. Furthermore, starting a car involves the discharge at a very large electric current, thus the safety concern needs to be accounted for too. The present invention solves the difficulty in starting the car in a very low temperature of -40°C, and the power heating circuit can turn off outputs immediately when short-circuiting, which protects the circuits on the starter and the clamps and also solves the safety issues of using the car starter effectively.

## Description

### BACKGROUND OF THE INVENTION

### a) Field of the Invention

The present invention relates to a technical field in starting up a car under very low temperature and in securing safe driving, and more particularly to a car starter which is able to work under very low temperature and a protection circuit thereof.

### b) Description of the Prior Art

As the continuous development in automobile industries, most of the existing cars are operated on automatic shifts. Therefore, when the car batteries do not work, the driver will have to call for rescue. However, this process will require a long time of waiting and sometimes the driver will need to pay expensive fees. To solve these issues, many mobile power bank companies have brought up a car starter to ignite the car, accordingly. As being able to be carried very conveniently, along with the function of recharging a cell phone, a laptop computer or a camera, this power source is very popular immediately upon being shown up in the markets.

It is well known that there are in general two reasons why a car cannot be started:
1. The car batteries are depleted.
2. The car batteries are charged but the temperature of the batteries is too low to work.

For the first problem, people will replace the batteries periodically. However, for the second problem, there is currently no good approach to deal with it.

Accordingly, the present invention discloses a proper means to solve these two problems. An existing car starter uses generally high-rate lithium polymer batteries and the effective working temperature of these batteries is between -10°C and 60°C. It means that the car starter will not work when the temperature is below -10°C (through an effective treatment, some vendors can bring up the batteries that can work at -20°C). However, in practical use, the condition that the temperature is below -10°C will happen very often. Therefore, to solve this problem, many vendors focus on solving the technical difficulty in the working temperature of the high-rate lithium polymer batteries. Due to the limitation of the properties of the batteries themselves, this technical breakthrough is very difficult.

The present invention applies a high stability heating technique to build up a suitable working environment for the batteries, thereby effectively solving the difficulty in that the batteries cannot work at a very low temperature of -40°C. On the other hand, as a very high electric current of more than or equal to 200A is required to start the car, a lot of side effects will be resulted from this high electric current, such as the burn-down of electronic parts when starting the car repeatedly, which will damage the ignition clamps. The less severe outcome is that the car cannot be started and the more severe outcome is that the mobile power bank will be recharged back from the car batteries, causing fire or swelling to the mobile power bank. To solve this problem, many vendors change the number of primary electronic parts of the ignition clamps from 2 to 4 or 6. Other vendors add fuses to increase the safety based on the original design. Nevertheless, all these means are not able to solve the issues in safe use of the car starter completely.

### SUMMARY OF THE INVENTION

The present invention relates to a technical field in starting up a car under very low temperature and in securing safe driving, and more particularly to a car starter which is able to work under very low temperature and a protection circuit thereof, which are very practical.

To achieve the abovementioned object, the present invention discloses a car starter which is able to work under very low temperature and a protection circuit thereof, including primarily an MCU (Microcontroller Unit) single-chip microcomputer, a starter, a power heating circuit which controls the heating status of the power, a positive electrode output end, a negative electrode output end, and a MOS (Metal-Oxide Semiconductor) tube control circuit which enters into a closed state when an external level is lowered. The positive electrode of the said starter is connected respectively with the positive electrode output end and the power heating circuit, an end of the said MOS tube control circuit is connected with the negative electrode output end, and the other end of the said MOS tube control circuit is connected with the negative electrode of the starter. Two pins are drawn from the said MCU single-chip microcomputer to connect respectively with the positive electrode output end and the negative electrode output end. Another two pins are also drawn from the said MCU single-chip microcomputer to connect respectively with one of two ends of the MOS tube control circuit. In addition, another three pins are drawn from the said MCU single-chip microcomputer to connect with the power heating circuit.

The said power heating circuit includes a press button by which an instruction is sent out to the MCU single-chip microcomputer to heat up the power or not, a thermistor which senses the environment temperature, an amplifying MOS tube and a thermal fuse which provides heat to the power. The said MCU single-chip microcomputer is connected electrically with the press button, the thermistor and the grid of the amplifying MOS tube, respectively. An end of the said thermal fuse is connected electrically with the drain of the amplifying MOS tube, and the other end of the said thermal fuse is connected electrically with the starter.

An end of the said press button is connected electrically with the MCU single-chip microcomputer, and the other end of the said press button is grounded to release statics. An end of the said thermistor is connected electrically with the MCU single-chip microcomputer, and the other end of the said thermistor is grounded to release statics. The source of the said amplifying MOS tube is grounded.

The said MOS tube control circuit includes a first MOS tube, a second MOS tube, a third MOS tube, a fourth MOS tube, a fifth MOS tube and a sixth MOS tube. The sources of the said first MOS tube, second MOS tube and third MOS tube are connected respectively with the negative electrode output end, and the grids are connected respectively with the MCU single-chip microcomputer. The sources of the said fourth MOS tube, fifth MOS tube and sixth MOS tube are connected respectively with the power, and the grids are connected respectively with the MCU single-chip microcomputer. The drains of the said first MOS tube, second MOS tube and third MOS tube are connected with one another, and the drains of the said fourth MOS tube, fifth MOS tube and sixth MOS tube are connected with one another.

The said first MOS tube, second MOS tube, third MOS tube, fourth MOS tube, fifth MOS tube and sixth MOS tube are all an N-shaped MOS tube.

The benefits of the present invention are disclosed below.

In comparison with the existing technology, the car starter which is able to work under very low temperature and the protection circuit thereof, according to the present invention, are provided with an independent power heating circuit to heat up the batteries of a car starter quickly and safely in a low temperature environment, so that the batteries of the car starter can achieve a reasonable working temperature, thereby solving the problems of using the car starter under low temperature. In addition, when the circuit is short-circuited, the MCU single-chip microcomputer will receive a voltage which exceeds a predetermined value; whereas, the pins of the MCU single-chip microcomputer and the MOS tube control circuit will be lowered quickly to become a low level, and the MOS tube control circuit will enter into a closed state to protect the electronic parts between the positive electrode output end and the negative electrode output end. In the present invention, the MCU single-chip microcomputer controls the on or off of the MOS tubes, by detecting whether the electric current flowing through the MOS tubes is abnormal and whether the temperature of the MOS tubes is abnormal, to implement protection. The advantage of this kind of circuit is that the circuit will turn off the outputs immediately when short-circuiting, which protects the circuits on the starter and the clamps, thereby solving the safety issues of the starter effectively.

To enable a further understanding of the said objectives and the technological methods of the invention herein, the brief description of the drawings below is followed by the detailed description of the preferred embodiments.

### BRIEF DESCRIPTION OF THE DRAWINGS

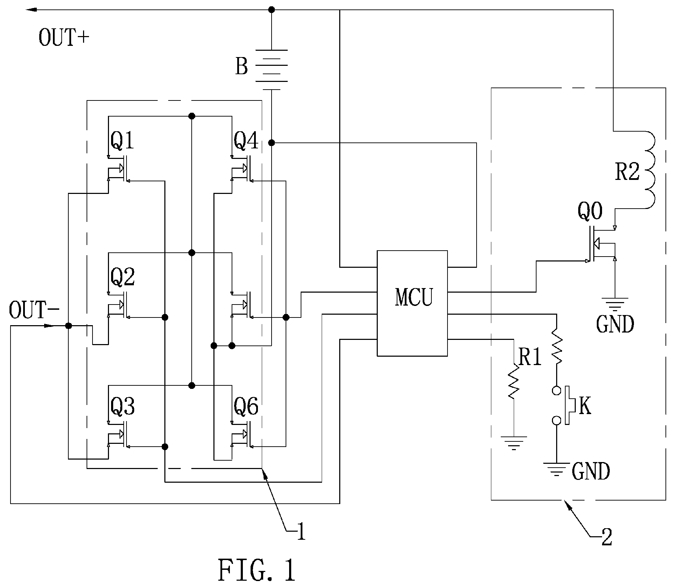

FIG. 1 shows a circuit diagram of the present invention.

### DETAILED DESCRIPTION OF THE PREFERRED EMBODIMENTS

Referring to FIG. 1, the present invention discloses a car starter which is able to work under very low temperature and a protection circuit thereof, comprising primarily a positive electrode output end OUT+, a negative electrode output end OUT-, an MCU single-chip microcomputer, a starter B, a power heating circuit 2 which controls the heating status of the power, and a MOS tube control circuit 1 which enters into a closed state when an external level is lowered. The positive electrode of the starter B is connected respectively with the positive electrode output end OUT+ and the power heating circuit 2, an end of the MOS tube control circuit 1 is connected with the negative electrode output end OUT-, and the other end of the MOS tube control circuit 1 is connected with the negative electrode of the starter B. Two pins are drawn from the MCU single-chip microcomputer to connect respectively with the positive electrode output end OUT+ and the negative electrode output end OUT-. Another two pins are also drawn from the MCU single-chip microcomputer to connect respectively with one of two ends of the MOS tube control circuit 1. In addition, another three pins are drawn from the MCU single-chip microcomputer to connect with the power heating circuit 2.

In comparison with the existing technology, the car starter which is able to work under very low temperature and the protection circuit thereof, according to the present invention, are provided with an independent power heating circuit 2 to heat up the batteries of a car starter quickly and safely in a low temperature environment, so that the batteries of the car starter can achieve a reasonable working temperature, thereby solving the problems of using the car starter under low temperature. In addition, when the circuit is short-circuited, the MCU single-chip microcomputer will receive a voltage which exceeds a predetermined value; whereas, the pins of the MCU single-chip microcomputer and the MOS tube control circuit 1 will be lowered quickly to become a low level, and the MOS tube control circuit 1 will enter into a closed state to protect the electronic parts between the positive electrode output end OUT+ and the negative electrode output end OUT-. In the present invention, the MCU single-chip microcomputer controls the on or off of the MOS tubes, by detecting whether the electric current flowing through the MOS tubes is abnormal and whether the temperature of the MOS tubes is abnormal, to implement protection. The advantage of this kind of circuit is that the circuit will turn off the outputs immediately when short-circuiting, which protects the circuits on the starter and the clamps, thereby solving the safety issues of the starter effectively.

The power heating circuit 2 includes a press button K by which an instruction is sent out to the MCU single-chip microcomputer to heat up the power or not, a thermistor R1 which senses the environment temperature, an amplifying MOS tube Q0 and a thermal fuse R2 which provides heat to the power. The MCU single-chip microcomputer is connected electrically with the press button K, the thermistor R1 and the grid of the amplifying MOS tube Q0, respectively. An end of the thermal fuse R2 is connected electrically with the drain of the amplifying MOS tube Q0, and the other end of the thermal fuse R2 is connected electrically with the starter B. When the temperature of the starter B is low, the press button K is pressed down to control the thermal fuse R2 to heat up, thereby increasing the temperature of the power in time. In the present invention, an external heating method is used, wherein an independent low-temperature press button is added without affecting the usage of the existing car starter B. The low-temperature press button controls an independent circuit to heat up the batteries of the car starter B quickly and safely in a low temperature environment.

An end of the press button K is connected electrically with the MCU single-chip microcomputer, and the other end of the press button K is grounded to release statics. An end of the thermistor R1 is connected electrically with the MCU single-chip microcomputer, and the other end of the thermistor R1 is grounded to release statics. The source of the amplifying MOS tube Q0 is grounded.

The MOS tube control circuit 1 includes a first MOS tube Q1, a second MOS tube Q2, a third MOS tube Q3, a fourth MOS tube Q4, a fifth MOS tube Q5 and a sixth MOS tube Q6, wherein the sources of the first MOS tube Q1, second MOS tube Q2 and third MOS tube Q3 are connected respectively with the negative electrode output end OUT-, and the grids are connected respectively with the MCU single-chip microcomputer. The sources of the fourth MOS tube Q4, fifth MOS tube Q5 and sixth MOS tube Q6 are connected respectively with the power, and the grids are connected respectively with the MCU single-chip microcomputer. The drains of the first MOS tube Q1, second MOS tube Q2 and third MOS tube Q3 are connected with one another, and the drains of the fourth MOS tube Q4, fifth MOS tube Q5 and sixth MOS tube Q6 are connected with one another.

The first MOS tube Q1, second MOS tube Q2, third MOS tube Q3, fourth MOS tube Q4, fifth MOS tube Q5 and sixth MOS tube Q6 are all an N-shaped MOS tube.

It is of course to be understood that the embodiments described herein is merely illustrative of the principles of the invention and that a wide variety of modifications thereto may be effected by persons skilled in the art without departing from the spirit and scope of the invention as set forth in the following claims.

## Claims

1. A car starter which works under very low temperature and a protection circuit thereof, wherein having a circuit which starts the car safely under a reasonably very low temperature condition and having a protection circuit, comprising an MCU (Microcontroller Unit) single-chip microcomputer, a starter B, a power heating circuit 2 which controls the heating status of the power, a positive electrode output end OUT+, a negative electrode output end OUT- and a MOS (Metal-Oxide Semiconductor) tube control circuit 1 which enters into a closed state when an external level is lowered, wherein the positive electrode of the starter B is connected respectively with the positive electrode output end OUT+ and the power heating circuit 2, an end of the MOS tube control circuit 1 is connected with the negative electrode output end OUT-, the other end of the MOS tube control circuit 1 is connected with the negative electrode of the starter B, two pins are drawn from the MCU single-chip microcomputer to connect respectively with the positive electrode output end OUT+ and the negative electrode output end OUT-, another two pins are drawn from the MCU single-chip microcomputer to connect respectively with one of two ends of the MOS tube control circuit 1, and another three pins are drawn from the MCU single-chip microcomputer to connect with the power heating circuit 2.

2. The car starter which works under very low temperature and the protection circuit thereof, according to claim 1, wherein the power heating circuit 2 includes a press button K which sends out an instruction to the MCU single-chip microcomputer to heat up the power or not, a thermistor R1 which senses the environment temperature, an amplifying MOS tube Q0 and a thermal fuse R2 which provides heat to the power; the MCU single-chip microcomputer being connected electrically with the press button K, the thermistor R1, and grid of the amplifying MOS tube Q0, respectively; an end of the thermistor R1 being connected electrically with drain of the amplifying MOS tube Q0, and the other end of the thermistor R1 being connected electrically with the starter B.

3. The car starter which works under very low temperature and the protection circuit thereof, according to claim 2, wherein an end of the press button K is connected electrically with the MCU single-chip microcomputer, the other end of the press button K is grounded to release statics, an end of the thermistor R1 is connected electrically with the MCU single-chip microcomputer, the other end of the thermistor R1 is grounded to release statics, and source of the amplifying MOS tube Q0 is grounded.

4. The car starter which works under very low temperature and the protection circuit thereof, according to claim 1, wherein the MOS tube control circuit 1 includes a first MOS tube Q1, a second MOS tube Q2, a third MOS tube Q3, a fourth MOS tube Q4, a fifth MOS tube Q5 and a sixth MOS tube Q6, with sources of the first MOS tube Q1, second MOS tube Q2 and third MOS tube Q3 being connected respectively with the negative electrode output end OUT-, and grids being connected respectively with the MCU single-chip microcomputer; sources of the fourth MOS tube Q4, fifth MOS tube Q5 and sixth MOS tube Q6 being connected respectively with the power, and grids being connected respectively with the MCU single-chip microcomputer; drains of the first MOS tube Q1, second MOS tube Q2 and third MOS tube Q3 being connected with one another, and drains of the fourth MOS tube Q4, fifth MOS tube Q5 and sixth MOS tube Q6 being connected with one another.

5. The car starter which works under very low temperature and the protection circuit thereof, according to claim 4, wherein the first MOS tube Q1, second MOS tube Q2, third MOS tube Q3, fourth MOS tube Q4, fifth MOS tube Q5 and sixth MOS tube Q6 are all an N-shaped MOS tube.
